# EUROPEAN PATENT SPECIFICATION

(11) **EP 2 025 876 B1**
(45) Date of publication and mention of the grant of the patent: **23.05.2012**
(21) Application number: 08252724.3
(22) Date of filing: 18.08.2008
(51) Int. Cl.: F01D 11/02, F01D 11/04, F16J 15/34, F16J 15/44, F02C 7/28

(54) **Hydrostatic seal and back-up seal of a gas turbine engine and corresponding turbine assembly**
Turbinendichtung und Sicherungsdichtung von einem Gasturbinentriebwerk und entsprechende Turbinenanordnung
Joint de turbine et joint de sécurité associé d'un moteur à turbine à gaz et ensemble turbine associé

(30) Priority: 20.08.2007 US 841124; 17.08.2007 US 840636; 17.08.2007 US 840645
(43) Date of publication of application: 18.02.2009
(73) Proprietor: United Technologies Corporation, Hartford, CT 06101 (US)
(72) Inventor: Glahn, Jorn A., Manchester, CT 06042 (US); Munsell, Peter M., Granby, CT 06035 (US)
(74) Representative: Leckey, David Herbert

(56) References cited:
- EP-A1- 1 348 898
- EP-A1- 1 780 450
- EP-A1- 1 798 455
- EP-A2- 1 852 573
- GB-A- 1 174 207
- US-A- 2 545 916
- US-A- 4 103 899
- US-A1- 2008 018 054

## Description

### BACKGROUND

### Technical Field

The disclosure generally relates to gas turbine engines.

### Description of the Related Art

A gas turbine engine typically maintains pressure differentials between various components during operation. These pressure differentials are commonly maintained by various configurations of seals. In this regard, labyrinth seals oftentimes are used in gas turbine engines. As is known, labyrinth seals tend to deteriorate over time. By way of example, a labyrinth seal can deteriorate due to rub interactions from thermal and mechanical growths, assembly tolerances, engine loads and maneuver deflections. Unfortunately, such deterioration can cause increased flow consumption resulting in increased parasitic losses and thermodynamic cycle loss.

GB 1 174 207 shows the technical features of the preamble of independent claim 1.

### SUMMARY

Gas turbine engine systems involving hydrostatic face seals with integrated back-up seals are provided. In this regard, an embodiment of a seal assembly for a gas turbine engine is disclosed in independent claim 1.

An embodiment of a turbine assembly for a gas turbine engine is disclosed in dependent claim 6.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an exemplary embodiment of a hydrostatic face seal with integrated back-up seal.
FIG. 2 is a schematic diagram depicting an exemplary embodiment of a gas turbine engine.
FIG. 3 is a schematic diagram depicting a portion of the low-pressure turbine of FIG. 2, showing detail of the embodiment of the hydrostatic face seal with integrated back-up seal of FIG. 1 installed therein.

### DETAILED DESCRIPTION

Gas turbine engine systems involving hydrostatic face seals with integrated back-up seals are provided, several exemplary embodiments of which will be described in detail. In this regard, hydrostatic face seals can be used at various locations of a gas turbine engine, such as in association with a low-pressure turbine. Notably, a hydrostatic seal is a seal that uses balanced opening and closing forces to maintain a desired separation between a seal face and a corresponding seal runner. Unanticipated pressure fluctuations and/or vibrations could cause undesired contact between the seal face and the corresponding seal runner that can cause damage to the seal, e.g., carbon fracture. To mitigate the potential consequence of a damaged hydrostatic face seal, a back-up seal can be provided that is integrated with one or more components forming the hydrostatic seal.

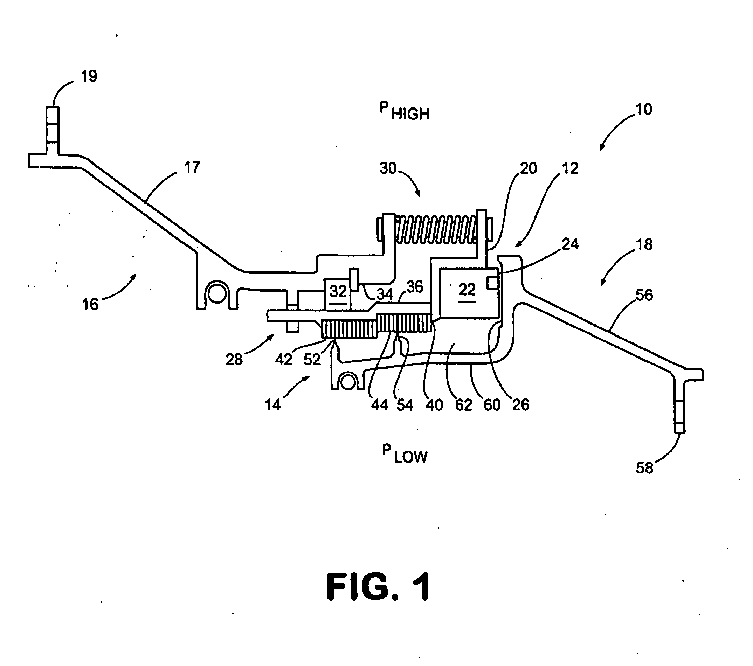

An exemplary embodiment of a hydrostatic face seal with an integrated back-up seal (collectively referred to herein as a "seal assembly") is depicted schematically in FIG. 1. As shown in FIG. 1, seal assembly 10 incorporates a hydrostatic face seal 12 and a back-up seal 14 that are provided by a stationary stator assembly 16 and a rotating rotor assembly 18. In general, the stator assembly incorporates the seal face of the associated hydrostatic face seal, as well as one or more of the primary components of the back-up seal. In contrast, the rotor assembly incorporates the seal runner of the hydrostatic face seal and others of the primary components of the back-up seal. Notably, when the back-up seal is a labyrinth seal, the stator assembly carries either the honeycomb lands or the knife edges, whereas the rotor carries the corresponding feature of the seal. In the embodiment of FIG. 1, the stator assembly incorporates the honeycomb lands and the rotor assembly incorporates the knife edges as will be described in detail.

With respect to the stator assembly, stator assembly 16 includes an arm 17 that extends from a mounting bracket 19. Mounting bracket 19 facilitates attachment, removal and/or position adjustment of the stator assembly. Notably, other embodiments may not incorporate mounting brackets for ease of installation and/or removal.

Stator assembly 16 incorporates a carrier 20 that carries face seal 22, which is annular in shape. Face seal 22 includes a seal face 24, which is one of the seal-forming surfaces of the hydrostatic seal. Carrier 20 is axially translatable so that seal face 24 can move, with the carrier, away from or toward (e.g., into contact with) a seal runner 26 (which is the other of the seal-forming components of the hydrostatic seal) of rotor assembly 18. In this embodiment, an anti-rotation lock 28 is provided to prevent circumferential displacement and to assist in aligning the seal carrier to facilitate axial translation.

A biasing member 30, which is provided as a spring in this embodiment, biases the seal face against the seal runner until overcome by gas pressure. In this regard, the biasing force of the biasing member can be selected to maintain a desired pressure differential between a high-pressure side (P_{HIGH}) and a low-pressure side (P_{LOW}) of the seal. Multiple biasing members may be spaced about the stator and carrier. Notably, a piston ring 32 is captured between opposing surfaces 34, 36 of the stator assembly and carrier, respectively, to control gas leakage between the arm of the stator assembly and the carrier.

Surface 40 of the carrier mounts lands 42, 44 of the labyrinth-type back-up seal 14. The lands may be comprised of an abradable structure such as honeycomb. Corresponding knife edges 52, 54 of the labyrinth-type back-up seal are carried by the rotor assembly.

With respect to the rotor assembly, rotor assembly 18 supports the seal runner 26, which is annular in shape. Specifically, the rotor assembly includes an arm 56 that extends from a mounting bracket 58. Mounting bracket 58 facilitates attachment, removal and/or position adjustment of the rotor assembly.

The knife edges 52, 54 of the labyrinth-type back-up seal are supported by an annular extension 60 that extends from the arm of the rotor assembly. Thus, extension 60 assists in defining an intermediate-pressure cavity 62 that is located between the hydrostatic seal and the back-up seal. Note also that extension 60 can assist in preventing debris (e.g., debris that may by attributable to unintended damage of the hydrostatic seal) from passing beyond the back-up seal.

In a normal mode of operation (i.e., when the hydrostatic face seal is properly seated), the desired pressure differential is maintained, at least primarily, across the hydrostatic face seal 12. However, in a failure mode of operation (i.e., when the hydrostatic face seal fails due to unintended circumstances), a corresponding pressure differential is maintained, at least primarily, across the back-up seal 14. Thus, in the failure mode of operation, intermediate-pressure cavity 62 typically exhibits P_{HIGH}.

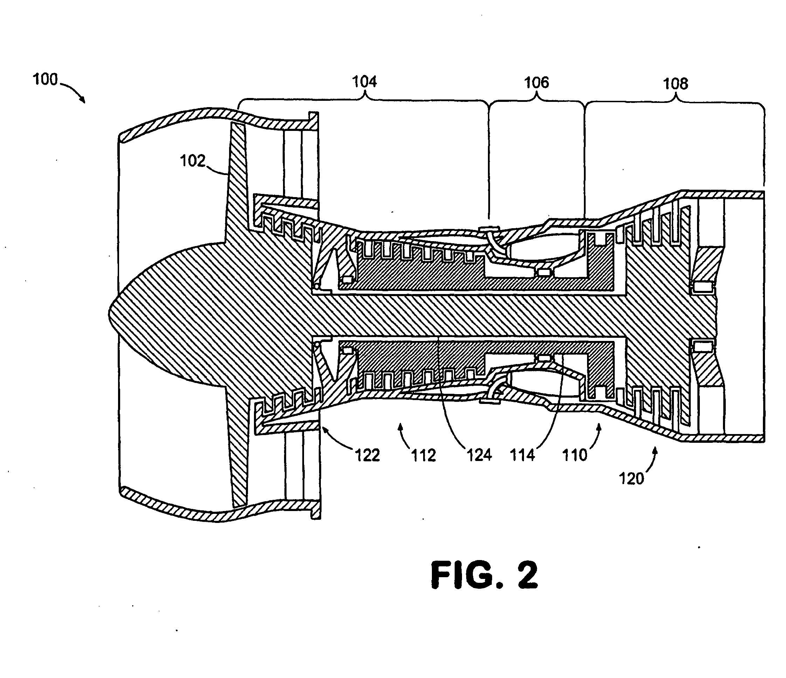

FIG. 2 is a schematic diagram depicting an exemplary embodiment of a gas turbine engine, in which an embodiment of a hydrostatic face seal with integrated back-up seal can be used. As shown in FIG. 2, engine 100 is configured as a turbofan that incorporates a fan 102, a compressor section 104, a combustion section 106 and a turbine section 108. Although the embodiment of FIG. 2 is configured as a turbofan, there is no intention to limit the concepts described herein to use with turbofans, as various other configurations of gas turbine engines can be used.

Engine 100 is a dual spool engine that includes a high-pressure turbine 110 interconnected with a high-pressure compressor 112 via a shaft 114, and a low-pressure turbine 120 interconnected with a low-pressure compressor 122 via a shaft 124. It should also be noted that although various embodiments are described as incorporating hydrostatic face seals in low-pressure turbines, such seals are not limited to use with low-pressure turbines.

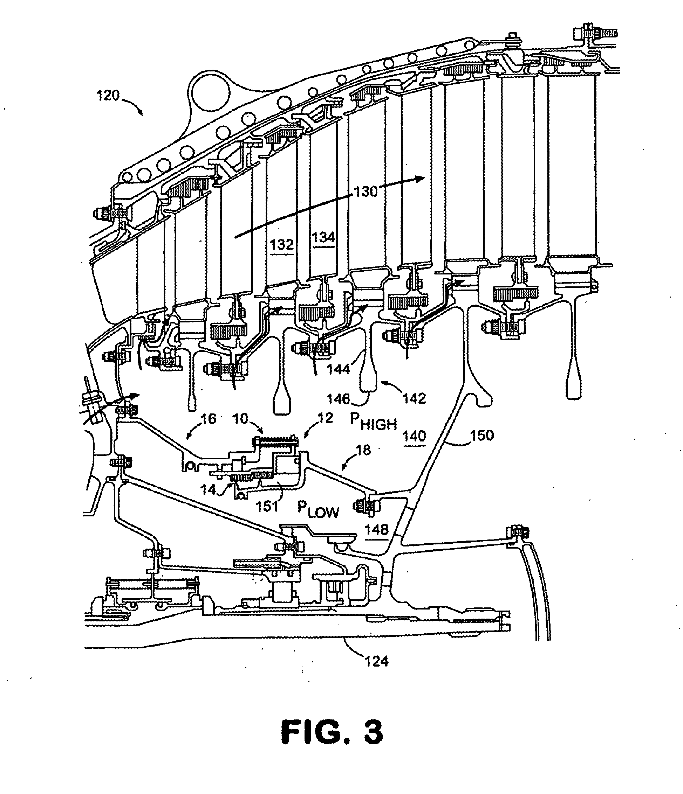

As shown in FIG. 3, low-pressure turbine 120 defines a primary gas flow path 130 along which multiple rotating blades (e.g., blade 132) and stationary vanes (e.g., vane 134) are located. In this embodiment, the blades are mounted to turbine disks, the respective webs and bores of which extend into a high-pressure cavity 140. For instance, disk 142 includes a web 144 and a bore 146, each of which extends into cavity 140.

A relatively lower-pressure cavity 148 is oriented between high-pressure cavity 140 and turbine hub 150, with a seal assembly 10 (described in detail before with respect to FIG. 1) being provided to maintain a pressure differential between the high-pressure cavity and the lower-pressure cavity. Seal assembly 10 incorporates a hydrostatic face seal 12 and a back-up seal 14 that are provided by a stator assembly 16 and a rotor assembly 18. Notably, the stator assembly is mounted to a non-rotating structure of the turbine, whereas the rotor assembly is mounted to a rotating structure. In the implementation of FIG. 3, the rotor assembly is mounted to the low-pressure turbine hub 150. Additionally, an intermediate-pressure cavity 151 is defined between hydrostatic face seal 12 and back-up seal 14.

It should be noted that seal assembly 10 is provided as a removable assembly, the location of which can be adjusted axially and radially. As such, thrust balance trimming of engine 100 can be at least partially accommodated by altering the position of the seal assembly to adjust the volume of cavities 140 and 148

In operation, the seal face intermittently contacts the seal runner. By way of example, contact between the seal face and the seal runner can occur during sub-idle conditions and/or during transient conditions. That is, contact between the seal face and the seal runner is maintained until gas pressure in the high-pressure cavity is adequate to overcome the biasing force, thereby separating the seal face from the seal runner. During normal operating conditions, however, the seal face and the seal runner should not contact each other.

Since the embodiments described herein are configured as lift-off seals (i.e., at least intermittent contact is expected), materials forming the surfaces that will contact each other are selected, at least in part, for their durability. In this regard, a material containing carbon can be used as a seal face material. It should be noted, however, that carbon can fracture or otherwise be damaged due to unintended contact (e.g., excessively forceful contact) between the seal face and the seal runner as may be caused by severe pressure fluctuations and/or vibrations, for example. It should also be noted that carbon may be susceptible to deterioration at higher temperatures. Therefore, carbon should be used in locations where predicted temperatures are not excessive such as in the low-pressure turbine. By way of example, use of such a material may not be appropriate, in some embodiments, in a high-pressure turbine.

In a normal mode of operation (i.e., when the hydrostatic seal is properly functioning), a nominal pressure differential exists between intermediate-pressure cavity 151 and lower-pressure cavity 148. That is, the pressure differential between the high-pressure cavity and the lower-pressure cavity is maintained, at least primarily, across the hydrostatic face seal 12. However, in a failure mode of operation (i.e., the hydrostatic seal fails), the pressure of the high-pressure cavity 140 is depleted to a level lower than during the normal mode of operation but higher than that of intermediate cavity 151 during normal operation. The increase in pressure differential across the back-up seal 14 is due to the increased flow rate imposed on the back-up seal during failure of the primary seal. Thus, in the failure mode of operation, pressure in intermediate cavity 151 increases and a corresponding pressure differential is maintained, at least primarily, across the back-up seal 14.

It should be emphasized that the above-described embodiments are merely possible examples of implementations set forth for a clear understanding of the principles of this disclosure. Many variations and modifications may be made to the above-described embodiments without departing substantially from the principles of the disclosure. By way of example, although the embodiments described herein are configured as lift-off seals, other types of seals can be used. All such modifications and variations are intended to be included herein within the scope of this disclosure and protected by the accompanying claims.

## Claims

1. A seal assembly (10) for a gas turbine engine comprising:
a stator assembly (16) and a rotor assembly (18) configured to operatively engage each other to form a first seal (12) and a second seal (14), wherein the stator assembly (16) has a carrier (20), a face seal (22) being mounted to the carrier (20) such that the carrier (20) positions the seal face (24) with respect to the seal runner (26);
the first seal (12) being provided by a hydrostatic seal having a seal face (24) and a seal runner (26), wherein the seal runner (26) is a portion of the rotor assembly (18);
and
the second seal (14) being provided by a labyrinth seal such that responsive to a failure of the first seal (12), the back-up seal (14) maintains at least a portion of a pressure differential established by the first seal (12) prior to the failure;
wherein the labyrinth seal (14) has a land (42) and a knife edge (52), the knife edge (52) being operative to interact with the land (42) to form the second seal (14), the land (42) being supported by the stator assembly (16) and the knife edge (52) being supported by the rotor assembly (18), **characterised in that** the seal assembly has an annular extension (60) that extends from an arm of the rotor assembly, which annular extension (60) assists in defining an intermediate-pressure cavity (62) that is located between the first seal (12) and the second seal (14).

2. The assembly of claim 1, wherein the carrier (20) is operative to move the seal face (24) in the axial direction of the gas turbine engine.

3. The assembly of claim 1 or claim 2, wherein each of the stator assembly (16) and the rotor assembly (18) has a mounting bracket (17, 56) operative to removably mount the stator assembly (16) and the rotor assembly (18), respectively, within the gas turbine engine.

4. The assembly of any preceding claim, wherein the hydrostatic seal (12) is a lift-off seal, with the seal face (24) being biased to a contact position in which the seal face (24) contacts the seal runner (26).

5. The assembly of claim 4, wherein the stator assembly (16) has a biasing member (30) operative to bias the seal face (24) to the contact position.

6. A turbine assembly for a gas turbine engine, comprising a turbine (120) having a seal assembly as claimed in claim 1.

7. The turbine assembly of claim 6, wherein the turbine (120) is a low-pressure turbine.

8. The assembly of any preceding claim, wherein at least a portion of the seal face (24) configured to contact the seal runner (26) is formed of a material comprising carbon.

## Patentansprüche

1. Dichtungsanordung (10) für eine Gasturbinenmaschine umfassend:
eine Statoranordnung (16) und eine Rotoranordnung (18), die dazu ausgebildet sind, einander betriebsmäßig in Eingriff zu nehmen, um eine erste Dichtung (12) und eine zweite Dichtung (14) auszubilden, wobei die Statoranordnung (16) einen Träger (20) aufweist, wobei eine Flächendichtung (22) an dem Träger (20) derart angebracht ist, dass der Träger (20) die Dichtungsfläche (24) bezogen auf den Dichtungsläufer (26) positioniert;
wobei die erste Dichtung (12) durch eine hydrostatische Dichtung bereitgestellt ist, die eine Dichtungsfläche (24) und einen Dichtungsläufer (26) aufweist, wobei der Dichtungsläufer (26) ein Bereich der Rotoranordnung (18) ist; und
wobei die zweite Dichtung (14) durch eine Labyrinthdichtung bereitgestellt ist, so dass, in Erwiderung auf einen Fehler der ersten Dichtung (12), die Reservedichtung (14) zumindest einen Teil einer durch die erste Dichtung (12) vor dem Fehler gebildeten Druckdifferenz erhält;
wobei die Labyrinthdichtung (14) einen Steg (42) und eine Messerkante (52) aufweist, wobei die Messerkante (52) dazu in der Lage ist, mit dem Steg (42) zusammenzuwirken, um die zweite Dichtung (14) zu bilden, wobei der Steg (42) durch die Statoranordnung (16) gestützt ist und die Messerkante (52) durch die Rotoranordnung (18) gestützt ist,
**dadurch gekennzeichnet, dass**
die Dichtungsanordnung einen ringförmigen Ansatz (60) aufweist, der sich von einem Arm der Rotoranordnung erstreckt, wobei der ringförmige Ansatz die Ausbildung einer Zwischendruck-Aussparung (62) unterstützt, die zwischen der ersten Dichtung (12) und der zweiten Dichtung (14) angeordnet ist.

2. Anordnung nach Anspruch 1, wobei der Träger (20) dazu in der Lage ist, die Dichtungsfläche (24) in die axiale Richtung der Gasturbinenmaschine zu bewegen.

3. Anordnung nach Anspruch 1 oder Anspruch 2, wobei jede der Statoranordnung (16) und der Rotoranordnung (18) einen Anbringungshalter (17, 56) aufweist, der dazu in der Lage ist, die Statoranordnung (16) und die Rotoranordnung (18) jeweils entfernbar innerhalb der Gasturbinenmaschine anzubringen.

4. Anordnung nach einem der vorangehenden Ansprüche, wobei die hydrostatische Dichtung (12) eine Abhebedichtung ist, wobei die Dichtungsfläche (24) hin zu einer Kontaktposition beaufschlagt ist, in welcher die Dichtungsfläche (24) den Dichtungsläufer (26) kontaktiert.

5. Anordnung nach Anspruch 4, wobei die Statoranordnung (16) ein Beaufschlagungselement (30) aufweist, das in der Lage ist, die Dichtungsfläche (24) hin zu der Kontaktposition zu beaufschlagen.

6. Turbinenanordnung für eine Gasturbinenmaschine, umfassend eine Turbine (120), die eine Dichtungsanordnung nach Anspruch 1 aufweist.

7. Turbinenanordnung nach Anspruch 6, wobei die Turbine (120) eine Niederdruckturbine ist.

8. Anordnung nach einem der vorangehenden Ansprüche, wobei zumindest ein Bereich der Dichtungsfläche (24), der dazu ausgebildet ist, den Dichtungsläufer (26) zu kontaktieren, aus einem Material, das Karbon umfasst, ausgebildet ist.

## Revendications

1. Ensemble de joint (10) pour un moteur à turbine à gaz comprenant ;
un ensemble de stator (16) et un ensemble de rotor (18) configurés pour se mettre en prise l'un avec l'autre de manière opérationnelle pour former un premier joint (12) et un second joint (14), dans lequel l'ensemble de stator (16) comprend un support (20), un joint facial (22) étant monté sur le support (20) de sorte que le support (20) positionne la face de joint (24) par rapport à la roue de joint (26) ;
le premier joint (12) étant fourni par un joint hydrostatique ayant une face de joint (24) et une roue de joint (26), dans lequel la roue de joint (26) est une portion de l'ensemble de rotor (18) ;
le second joint (14) étant fourni par un joint labyrinthe de sorte qu'en réponse à une défaillance du premier joint (12), le joint de renfort (14) maintient au moins une portion d'une pression différentielle établie par le premier joint (12) avant la défaillance ;
dans lequel le joint labyrinthe (14) comprend un cordon (42) et un couteau (52), le couteau (52) étant opérationnel pour interagir avec le cordon (42) afin de former le second joint (14), le cordon (42) étant supporté par l'ensemble de stator (16) et le couteau (52) étant supporté par l'ensemble de rotor (18), **caractérisé en ce que** l'ensemble de joint comprend une extension annulaire (60) qui s'étend à partir d'un bras de l'ensemble de rotor, laquelle extension annulaire (60) aide à définir une cavité de pression intermédiaire (62) qui est située entre le premier joint (12) et le second joint (14).

2. Ensemble selon la revendication 1, dans lequel le support (20) est opérationnel pour déplacer la face de joint (24) dans la direction axiale du moteur à turbine à gaz.

3. Ensemble selon la revendication 1 ou 2, dans lequel chacun de l'ensemble de stator (16) et de l'ensemble de rotor (18) comprend une console de montage (17, 56) opérationnelle pour monter de façon amovible l'ensemble de stator (16) et l'ensemble de rotor (18), respectivement, à l'intérieur du moteur à turbine à gaz.

4. Ensemble selon l'une quelconque des revendications précédentes, dans lequel le joint hydrostatique (12) est un joint pouvant être retiré, avec la face de joint (24) étant sollicitée vers une position de contact dans laquelle la face de joint (24) entre en contact avec la roue de joint (26).

5. Ensemble selon la revendication 4, dans lequel l'ensemble de stator (16) comprend un organe de sollicitation (30) opérationnel pour solliciter la face de joint (24) vers la position de contact.

6. Ensemble de turbine pour un moteur à turbine à gaz, comprenant une turbine (120) comportant un ensemble de joint selon la revendication 1.

7. Ensemble de turbine selon la revendication 6, dans lequel la turbine (120) est une turbine basse pression.

8. Ensemble selon l'une quelconque des revendications précédentes, dans lequel au moins une portion de la face de joint (24) configurée pour entrer en contact avec la roue de joint (26) est formée d'un matériau comprenant du carbone.
